# FASCICULE DE BREVET EUROPEEN

(11) **EP 3 147 081 B1**
(45) Date de publication et mention de la délivrance du brevet: **10.11.2021**
(21) Numéro de dépôt: 16188249.3
(22) Date de dépôt: 12.09.2016
(51) Int. Cl.: B25B 23/14, F16B 31/02, G01L 5/24, H01R 4/30

(54) **DISPOSITIF DE SURVEILLANCE DE LA TEMPÉRATURE ET DU SERRAGE D'UNE VIS**
VORRICHTUNG ZUR ÜBERWACHUNG DER TEMPERATUR UND DES FESTZIEHVORGANGS EINER SCHRAUBE
DEVICE FOR MONITORING TEMPERATURE AND TIGHTENING OF A SCREW

(30) Priorité: 25.09.2015 FR 1559043
(43) Date de publication de la demande: 29.03.2017
(73) Titulaire: Schneider Electric Industries SAS, 92500 Rueil-Malmaison (FR)
(72) Inventeur: LOPEZ, Josep, 38050 Grenoble Cedex 09 (FR); PERRIN, Alain, 38050 Grenoble Cedex 09 (FR)
(74) Mandataire: Colette, Marie-Françoise

(56) Documents cités:
- EP-A1- 1 462 220
- WO-A1-2011/090539
- FR-A1- 2 497 347
- FR-A1- 2 975 232
- None

## Description

### Domaine technique de l'invention

La présente invention se rapporte à un dispositif de surveillance de la température et du serrage d'une vis. La vis est par exemple employée dans une borne de connexion électrique ou sur une barre conductrice d'un jeu de barres pour serrer un conducteur électrique.

### Etat de la technique

Il est de plus en plus nécessaire de pouvoir connaître rapidement l'état d'une installation électrique, telle que par exemple celle placée à l'intérieur d'une armoire électrique. L'opérateur qui réalise son inspection doit pouvoir rapidement récupérer un certain nombre d'informations liées à l'état de l'installation inspectée. Or aujourd'hui, certaines informations ne sont pas forcément lisibles aisément et nécessitent certaines manipulations. C'est le cas par exemple des informations liées aux vis employées dans l'installation électrique, par exemple au niveau des bornes électriques ou des barres conductrices d'un jeu de barres. Ces informations sont la température de la vis au niveau de sa tête et son niveau de serrage. En effet, le suivi de ces paramètres est primordial si l'on veut s'assurer du bon fonctionnement de l'installation. Les demandes de brevet WO 2011/090539A1, EP 1 462 220 A1 ou FR 2 975 232 A1 montrent des exemples de dispositifs connus pour évaluer un couple de serrage ou l'état d'une vis de fixation.

Le but de l'invention est donc de proposer un dispositif pour surveiller la température et le serrage d'une vis, telle qu'une vis employée dans une borne ou sur une barre conductrice d'un jeu de barres.

### Exposé de l'invention

Ce but est atteint par un dispositif de surveillance de la température et du serrage d'une vis, selon la revendication 1.

Selon une particularité, l'organe capteur comporte un aimant permanent monté sur un capuchon fixé sur la tête de vis.

Selon une autre particularité, l'organe capteur comporte un capteurà effet-hall agencé pour mesurer le champ magnétique généré par ledit aimant permanent.

Selon une autre particularité, l'organe capteur comporte un ou plusieurs micro-interrupteurs à actionnement magnétique.

Selon une autre particularité, le dispositif comporte un système d'alimentation électrique agencé pour fournir de l'électricité au détecteur de température, à la première unité de détection, à la deuxième unité de détection et à l'unité de signalisation.

Selon une autre particularité, le système d'alimentation électrique comporte un générateur d'énergie électrique par induction comprenant au moins un transformateur de courant comportant un noyau destiné à être agencé autour dudit conducteur électrique formant le primaire d'un transformateur, et un enroulement réalisé autour du noyau et formant le secondaire dudit transformateur pour récupérer une énergie électrique lorsqu'un courant électrique circule dans le conducteur électrique.

### Brève description des figures

D'autres caractéristiques et avantages vont apparaître dans la description détaillée qui suit faite en regard des dessins annexés dans lesquels :
- la figure 1 représente, en vue de côté et de manière schématique, le dispositif de l'invention installé sur une vis de serrage sur barre conductrice,
- la figure 2 représente, en vue de face et de manière schématique, le dispositif de l'invention montré sur la figure 1,
- la figure 3 illustre par un schéma l'architecture du dispositif de l'invention,
- la figure 4 représente un perfectionnement du dispositif représenté sur les figures 1 et 2,
- les figures 5A et 5B représentent deux variantes de réalisation employées dans le dispositif de l'invention pour déterminer le niveau de serrage d'une vis.

### Description détaillée d'au moins un mode de réalisation

L'invention est destinée à déterminer la température au niveau d'une vis de serrage et son niveau de serrage lorsque celle-ci est employée dans le domaine électrique, notamment pour serrer un conducteur électrique sur une borne d'un appareil électrique ou sur une barre conductrice d'un jeu de barres.

De manière connue, une vis employée dans le domaine électrique comporte une tête 10 de vis et une tige 11 munie d'un filetage externe. Une rondelle 12 est éventuellement positionnée entre la vis et l'étrier d'une borne ou la barre conductrice. Un écrou 14 peut être prévu à l'extrémité de la tige qui est opposée à la tête. Dans la suite de la description et sur les figures, nous considérerons que la vis est destinée au serrage d'un conducteur (non représenté) sur une barre 13 conductrice.

Le dispositif de l'invention comporte ainsi :
- un détecteur de serrage destiné à déterminer le niveau de serrage de la vis,
- un détecteur de température destiné à mesurer la température au niveau de la tête de vis.

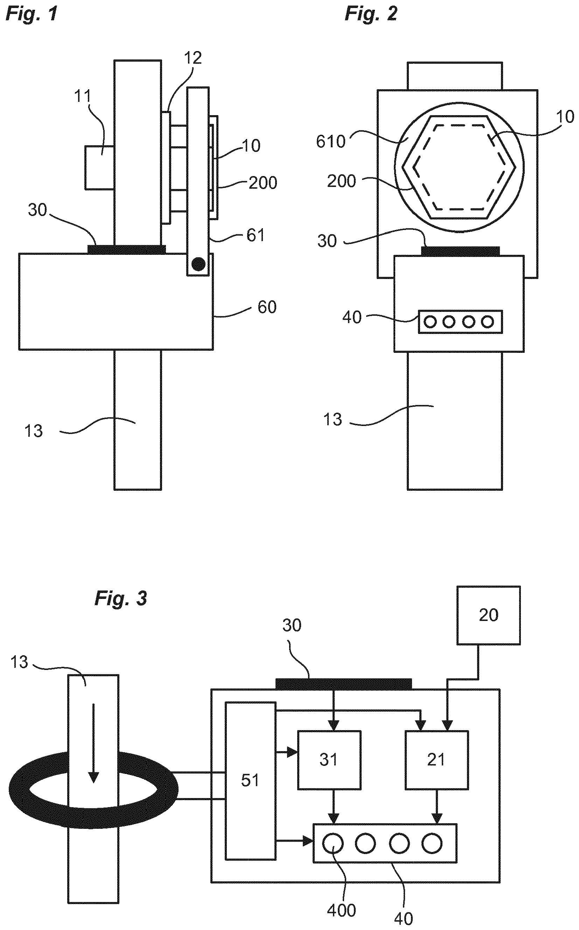

Le détecteur de serrage comporte un organe capteur 20 et une première unité de détection 21 (figure 3). L'organe capteur 20 comporte une première partie fixée sur la tête de vis et solidaire en rotation de celle-ci et une deuxième partie destinée à déterminer la position de la première partie en vue de générer un état de détection représentatif d'une position de la première partie par rapport à la deuxième partie. La première unité de détection 21 comporte une entrée à laquelle est connecté l'organe capteur 20 en vue de recevoir ledit état de détection fournie par l'organe capteur 20.

La première partie de l'organe capteur 20 comporte par exemple un capuchon 200 (figures 1 et 2), réalisé en matière plastique et agencé pour se fixer par clipsage sur la tête 10 de la vis, de manière à être solidaire en rotation de ladite vis lorsque celle-ci est vissée ou dévissée. Selon la taille de la tête de vis, la taille du capuchon est adaptée pour se fixer sur celle-ci.

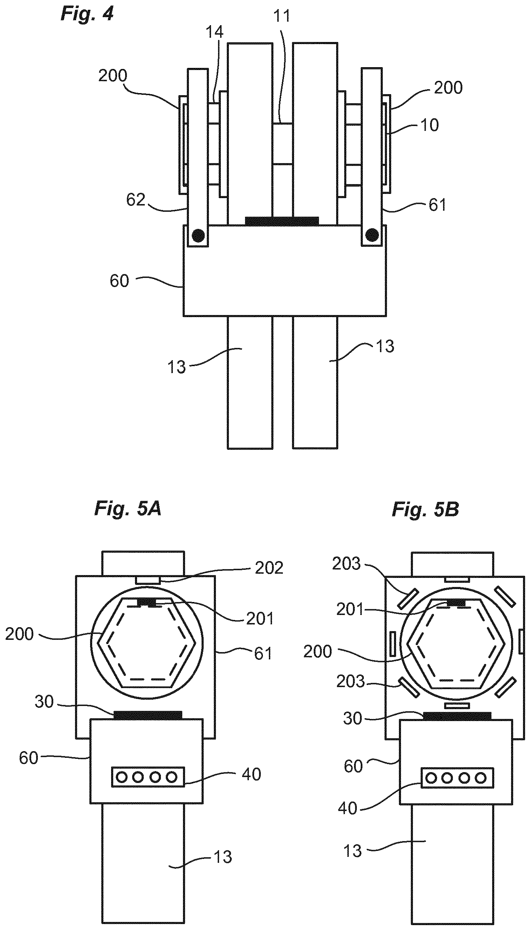

En référence aux figures 5A et 5B, l'organe capteur 20 peut prendre deux architectures distinctes :
- Sur la figure 5A, la première partie de l'organe capteur 20 comporte un aimant permanent 201 fixé sur le capuchon 200 et la deuxième partie comporte un capteur à effet hall 202 pour mesurer le champ magnétique émis par l'aimant permanent 201. Le capteur à effet hall 202 génère un signal vers la première unité de détection 21 qui dépend de la position de l'aimant permanent 201. Selon le signal reçu du capteur à effet hall 202, la première unité de détection 21 détermine le niveau de serrage de la vis.
- Sur la figure 5B, la première partie comporte également un aimant permanent 201 fixé sur le capuchon 200 et la deuxième partie comporte plusieurs organes de détection répartis sur toute la périphérie de la tête de vis et susceptibles chacun de générer un signal tout ou rien correspondant à leur état fermée ou à leur état ouvert. Les organes de détection sont fixes par rapport à la vis. Ils sont par exemple des micro-interrupteurs 203 à actionnement magnétique, tels que des interrupteurs de type « reed ». Chaque micro-interrupteur 203 est connecté à la première unité de détection 21. Selon l'état fermé ou ouvert de chaque micro-interrupteur 203, la première unité de détection 21 détermine la position de l'aimant permanent 201 et en déduit le niveau de serrage de la vis.

Avantageusement, la première unité de détection 21 détermine le niveau de serrage de la vis par comparaison entre le signal reçu de l'organe capteur 20 correspondant à une position angulaire de la vis avec un signal mesuré initialement correspondant à la position angulaire de la vis lorsque celle-ci est parfaitement serrée ou un signal mémorisé correspondant à une valeur déterminée de serrage. Si la différence entre les deux signaux dépasse une valeur déterminée, la première unité de détection 21 active une alerte.

Le détecteur de température comporte pour sa part un organe capteur 30 (figures 1 et 2), tel que par exemple un composant de type thermistance à coefficient thermique positif (PTC pour « Positive Temperature Coefficient ») ou à coefficient thermique négatif (NTC ou « Négative Temperature Coefficient ») et une deuxième unité de détection 31 comprenant au moins une entrée destinée à recevoir les valeurs de température mesurées par l'organe capteur 30 et au moins une sortie. Cette deuxième unité de détection 31 est par exemple agencée pour déterminer si une valeur de température dépasse un seuil déterminé mémorisé. L'organe capteur 30 du détecteur de température est par exemple positionné à une distance la plus faible possible de la tête de vis, en vue d'obtenir des mesures les plus précises possibles.

La première unité de détection 21 et la deuxième unité de détection 31 pourront être réalisées sous la forme d'un microcontrôleur ou être chacune réalisée à l'aide de composants électroniques discrets. Selon l'architecture, les données seront de nature analogique ou de nature numérique.

Le dispositif comporte une unité de signalisation 40 connectée sur la sortie de la première unité de détection 21 et sur la sortie de la deuxième unité de détection 31. Cette unité de signalisation 40 est destinée à alerter l'opérateur de l'état de la vis, que ce soient sa température et son niveau de serrage. Cette unité de signalisation 40 comporte par exemple plusieurs indicateurs lumineux 400.

Avantageusement, le dispositif comporte un système d'alimentation électrique destiné à alimenter en énergie électrique la première unité de détection 21, la deuxième unité de détection 31 et l'unité de signalisation 40.

Avantageusement, en référence à la figure 3, le système d'alimentation électrique comporte un générateur d'énergie électrique agencé pour générer de l'énergie électrique, de manière autonome. Ce système génère l'énergie électrique par induction. Il comprend au moins un transformateur de courant comprenant un noyau destiné à être agencé autour de la barre conductrice qui forme le primaire d'un transformateur, et un enroulement réalisé autour du noyau et formant le secondaire dudit transformateur pour récupérer une énergie électrique lorsqu'un courant électrique circule dans ladite barre conductrice. Le noyau présente par exemple une forme de tore 50 pouvant s'ouvrir pour venir entourer la barre 13. Le système comporte également un circuit électronique 51 qui est connecté au tore en vue de récupérer l'énergie électrique générée et qui la répartit aux différentes unités du dispositif.

Le dispositif comporte un boîtier principal 60 dans lequel sont placés la première unité de détection 21, la deuxième unité de détection 31, l'unité de signalisation 40 et le système d'alimentation électrique. Ce boîtier comporte une ouverture centrale de manière à laisser passer la barre conductrice à travers le tore du système d'alimentation électrique. L'organe capteur 30 du détecteur de température est fixé sur le boîtier principal 60 de manière à pouvoir capter la température. Il est alors positionné à proximité de la vis.

Le dispositif comporte également un premier boîtier secondaire 61 à travers lequel est formée une ouverture 610 pour laisser passer la tête de vis. Ce boîtier secondaire 61 porte la deuxième partie de l'organe capteur 20 du détecteur de serrage de la vis. Comme évoqué précédemment, la première partie de cet organe capteur est fixé sur le capuchon 200 positionné sur la tête de vis et au niveau de l'ouverture réalisée dans le boîtier secondaire 61.

En référence à la figure 4, le dispositif peut également comporter un deuxième boîtier secondaire 62 du même type que le premier, relié au boîtier principal. Ce deuxième boîtier est destiné à se positionner autour de l'écrou 14 vissé à l'extrémité de la vis, pour capter les informations de serrage et de température au niveau de l'écrou. Cette variante est adaptée lorsque le vis est agencée pour traverser deux barres conductrices 13, l'écrou 14 venant en appui contre la deuxième barre. Un capuchon similaire au capuchon 200 décrit ci-dessus sera employé pour se positionner sur ledit écrou 14.

Chaque boîtier secondaire est monté sur un mécanisme de charnière réalisé sur le boîtier principal, en vue de pouvoir pivoter par rapport à celui-ci.

Selon l'invention, les deux unités de détection pourront être agencées pour communiquer entre elles en vue de corréler les informations liées à la température et au niveau de serrage.

En perfectionnement, le dispositif peut comporter un émetteur de données agencé pour émettre les données de température et/ou de niveau de serrage à destination d'un récepteur distant de manière à pouvoir recueillir les informations.

L'émission des données pourra être réalisée par toute solution de communication sans-fil connue, telle que par exemple « Bluetooth ». Ces informations pourront être envoyées sur un serveur. Un terminal, tel que par exemple un téléphone intelligent ou une tablette, pourra comporter une application pour se connecter audit serveur en vue de visualiser ces informations.

Le dispositif de l'invention comporte ainsi de nombreux avantages, parmi lesquels :
- Il permet de connaître rapidement l'état de serrage et de température de chaque vis de serrage, sans l'emploi d'un dispositif de mesure externe,
- Il est autonome en énergie électrique et ne nécessite donc pas une maintenance particulière,
- Il s'installe facilement et rapidement,
- Il est particulièrement compact.

## Revendications

1. Dispositif de surveillance de la température et du serrage d'une vis, ladite vis comprenant au moins une tête (10) et une tige (11) et étant destinée à assurer le serrage d'un ou plusieurs conducteurs électriques, ledit dispositif comportant
- un détecteur de température positionné à proximité de la tête (10) de vis pour mesurer la température de lavis,
- un détecteur de serrage de la vis comprenant un organe capteur (20) et une première unité de détection (21) connectée à l'organe capteur (20) et agencée pour déterminer un niveau de serrage de la vis en fonction de l'état de détection de l'organe capteur (20),
- uneunité de signalisation (40) connectée à une sortie de la première unité de détection (21) et agencée pour signaler un état de serrage de la vis fournie par la première unité de détection (21) et/ou un état de température fournie par une deuxième unité de détection (31),
- un boîtier principal (60) dans lequel est logée la première unité de détection (21), le détecteur de température étant fixé sur ledit boîtier principal (60), ledit dispositif étant **caractérisé en ce que** :
- ledit organe capteur (20) comprend une première partie positionnée sur la tête (10) de la vis pour être solidaire en rotation de ladite vis et une deuxième partie, fixe par rapport à la première partie et agencée pour générer un état de détection représentatif d'une position de la première partie par rapport à la deuxième partie;
- le détecteur de température comporte un composant de type thermistance connecté à ladite deuxième unité de détection (31);
- ladite unité de signalisation (40) est connectée à une sortie de la deuxième unité de détection (31);
- le boîtier principal (60) loge également la deuxième unité de détection (31) et ladite unité de signalisation (40);
- le dispositif comporte en outre un boîtier secondaire (61) à travers lequel est formée une ouverture (610) pour laisser passer la tête (10) de vis, ce boîtier secondaire (61) portant la deuxième partie de l'organe capteur (20) du détecteur de serrage de la vis, ledit boîtier secondaire (61) étant monté sur un mécanisme de charnière réalisé sur le boîtier principal (60) en vue de pouvoir pivoter par rapport à celui-ci.

2. Dispositif selon la revendication 1, **caractérisé en ce que** l'organe capteur (20) comporte un aimant permanent (201) monté sur un capuchon (200) fixé sur la tête (10) de vis.

3. Dispositif selon la revendication 2, **caractérisé en ce que** l'organe capteur (20) comporte un capteur à effet-hall agencé pour mesurer le champ magnétique généré par ledit aimant permanent (201).

4. Dispositif selon la revendication 1 ou 2, **caractérisé en ce que** l'organe capteur (20) comporte un ou plusieurs micro-interrupteurs à actionnement magnétique.

5. Dispositif selon l'une quelconque des revendications précédentes, **caractérisé en ce qu'**il comporte un système d'alimentation électrique agencé pour fournir de l'électricité au détecteur de température, àla première unité de détection (21), à la deuxième unité de détection (31) et à l'unité de signalisation (40).

6. Dispositif selon la revendication 5, **caractérisé en ce que** le système d'alimentation électrique comporte un générateur d'énergie électrique par induction comprenant au moins un transformateur de courant comportant un noyau destiné à être agencé autour dudit conducteur électrique formant le primaire d'un transformateur, et un enroulement réalisé autour du noyau et formant le secondaire dudit transformateur pour récupérer une énergie électrique lorsqu'un courant électrique circule dans le conducteur électrique.

7. Dispositif selon larevendication 6, **caractérisé en ce que** le noyau présente une forme de tore (50) destinée à entourer le conducteur électrique (13).

8. Dispositif selon la revendication 6 ou 7, **caractérisé en ce qu'**il comporte un circuit électronique (51) connecté au secondaire du transformateur, le circuit électronique comportant des moyens de stockage de l'énergie électrique générée.

## Patentansprüche

1. Vorrichtung zur Überwachung der Temperatur und des Anziehens einer Schraube, wobei die Schraube mindestens einen Kopf (10) und einen Schaft (11) enthält und dazu bestimmt ist, das Einspannen eines oder mehrerer elektrischer Leiter zu gewährleisten, wobei die Vorrichtung aufweist:
- einen Temperaturfühler, der in der Nähe des Schraubenkopfes (10) positioniert ist, um die Temperatur der Schraube zu messen,
- einen Detektor des Anziehens der Schraube, der ein Sensorelement (20) und eine erste Erfassungseinheit (21) enthält, die mit dem Sensorelement (20) verbunden und eingerichtet ist, einen Anziehgrad der Schraube abhängig vom Erfassungszustand des Sensorelements (20) zu bestimmen,
- eine Signalisierungseinheit (40), die mit einem Ausgang der ersten Erfassungseinheit (21) verbunden und eingerichtet ist, einen Anziehzustand der Schraube, der von der ersten Erfassungseinheit (21) geliefert wird, und/oder einen Temperaturzustand zu signalisieren, der von einer zweiten Erfassungseinheit (31) geliefert wird,
- ein Hauptgehäuse (60), in dem die erste Erfassungseinheit (21) untergebracht ist,
wobei der Temperaturfühler auf dem Hauptgehäuse (60) befestigt ist, wobei die Vorrichtung **dadurch gekennzeichnet ist, dass**:
- das Sensorelement (20) einen ersten Teil, der auf dem Kopf (10) der Schraube positioniert ist, um mit der Schraube in Drehung fest verbunden zu sein, und einen zweiten Teil enthält, der bezüglich des ersten Teils ortsfest und eingerichtet ist, einen Erfassungszustand zu erzeugen, der für eine Position des ersten Teils bezüglich des zweiten Teils repräsentativ ist;
- der Temperaturfühler ein Bauteil der Art Thermistor aufweist, das mit der zweiten Erfassungseinheit (31) verbunden ist;
- die Signalisierungseinheit (40) mit einem Ausgang der zweiten Erfassungseinheit (31) verbunden ist;
- das Hauptgehäuse (60) ebenfalls die zweite Erfassungseinheit (31) und die Signalisierungseinheit (40) aufnimmt;
- die Vorrichtung außerdem ein Sekundärgehäuse (61) aufweist, durch das hindurch eine Öffnung (610) geformt ist, um den Kopf (10) der Schraube durchzulassen, wobei dieses Sekundärgehäuse (61) den zweiten Teil des Sensorelements (20) des Detektor des Anziehens der Schraube trägt, wobei das Sekundärgehäuse (61) auf einen Scharniermechanismus montiert ist, der auf dem Hauptgehäuse (60) hergestellt ist, um in Bezug auf dieses schwenken zu können.

2. Vorrichtung nach Anspruch 1, **dadurch gekennzeichnet, dass** das Sensorelement (20) einen Dauermagneten (201) aufweist, der auf eine am Schraubenkopf (10) befestigte Kappe (200) montiert ist.

3. Vorrichtung nach Anspruch 2, **dadurch gekennzeichnet, dass** das Sensorelement (20) einen Hall-Sensor aufweist, der eingerichtet ist, um das vom Dauermagneten (201) erzeugte Magnetfeld zu messen.

4. Vorrichtung nach Anspruch 1 oder 2, **dadurch gekennzeichnet, dass** das Sensorelement (20) einen oder mehrere Mikroschalter mit magnetischer Betätigung aufweist.

5. Vorrichtung nach einem der vorhergehenden Ansprüche, **dadurch gekennzeichnet, dass** sie ein Stromversorgungssystem aufweist, das eingerichtet ist, Strom an den Temperaturfühler, an die erste Erfassungseinheit (21), an die zweite Erfassungseinheit (31) und an die Signalisierungseinheit (40) zu liefern.

6. Vorrichtung nach Anspruch 5, **dadurch gekennzeichnet, dass** das Stromversorgungssystem einen Induktionsgenerator elektrischer Energie aufweist, der mindestens einen Stromwandler enthält, der einen Kern, der dazu bestimmt ist, um den elektrischen Leiter herum angeordnet zu werden, der die Primärseite eines Wandlers bildet, und eine Wicklung enthält, die um den Kern herum hergestellt ist und die Sekundärseite des Wandlers bildet, um eine elektrische Energie wiederzugewinnen, wenn ein elektrischer Strom im elektrischen Leiter fließt.

7. Vorrichtung nach Anspruch 6, **dadurch gekennzeichnet, dass** der Kern eine Torusform (50) aufweist, die dazu bestimmt ist, den elektrischen Leiter (13) zu umgeben.

8. Vorrichtung nach Anspruch 6 oder 7, **dadurch gekennzeichnet, dass** sie eine elektronische Schaltung (51) aufweist, die mit der Sekundärseite des Wandlers verbunden ist, wobei die elektronische Schaltung Speichereinrichtungen der erzeugten elektrischen Energie aufweist.

## Claims

1. Device for monitoring the temperature and tightness of a screw, said screw comprising at least a head (10) and a shank (11) and being intended to clamp one or more electrical conductors, said device comprising:
- a temperature detector positioned near the screw head (10) in order to measure the temperature of the screw,
- a screw tightness detector comprising a sensor device (20) and a first detection unit (21) connected to the sensor device (20) and designed to determine a level of tightness of the screw as a function of the detection status of the sensor device (20),
- a signalling unit (40) connected to an output of the first detection unit (21) and designed to signal a screw tightness status supplied by the first detection unit (21) and/or a temperature status supplied by a second detection unit (31),
- a main housing (60) in which the first detection unit (21) is housed,
the temperature detector being fixed to said main housing (60), said device being **characterized in that**:
- said sensor device (20) comprises a first part positioned on the head (10) of the screw so as to rotate as one with said screw, and a second part, that is fixed with respect to the first part and designed to generate a detection status indicative of a position of the first part with respect to the second part;
- the temperature detector comprises a component of the thermistor type connected to said second detection unit (31);
- said signalling unit (40) is connected to an output of the second detection unit (31);
- the main housing (60) also houses the second detection unit (31) and said signalling unit (40);
- the device further comprises a secondary housing (61) through which there is formed an opening (610) to allow the screw head (10) to pass, this secondary housing (61) bearing the second part of the sensor device (20) of the screw tightness detector, said secondary housing (61) being mounted on a hinge mechanism produced on the main housing (60) so as to be able to pivot with respect thereto.

2. Device according to Claim 1, **characterized in that** the sensor device (20) comprises a permanent magnet (201) mounted on a cap (200) fixed to the screw head (10).

3. Device according to Claim 2, **characterized in that** the sensor device (20) comprises a hall-effect sensor designed to measure the magnetic field generated by said permanent magnet (201).

4. Device according to Claim 1 or 2, **characterized in that** the sensor device (20) comprises one or more magnetically activated microswitches.

5. Device according to any one of the preceding claims, **characterized in that** it comprises an electrical power supply system designed to supply electricity to the temperature detector, to the first detection unit (21), to the second detection unit (31) and to the signalling unit (40).

6. Device according to Claim 5, **characterized in that** the electrical power supply system comprises an inductive electrical-energy generator comprising at least one current transformer comprising a core intended to be arranged around said electrical conductor forming the primary of a transformer, and a winding produced around the core and forming the secondary of said transformer in order to collect electrical energy when an electrical current flows through the electrical conductor.

7. Device according to Claim 6, **characterized in that** the core is in the shape of a torus (50) intended to surround the electrical conductor (13).

8. Device according to Claim 6 or 7, **characterized in that** it comprises an electronic circuit (51) connected to the secondary of the transformer, the electronic circuit comprising means for storing the electrical energy generated.
